# EUROPÄISCHE PATENTANMELDUNG

(11) **EP 1 004 484 A2**
(43) Veröffentlichungstag der Anmeldung: **31.05.2000**
(21) Anmeldenummer: 99123222.4
(22) Anmeldetag: 25.11.1999
(51) Int. Cl.: B60R 21/26

(54) **Gasgenerator für ein Sicherheitssystem**

(30) Priorität: 26.11.1998 DE 29821232 U
(71) Anmelder: TRW Airbag Systems GmbH & Co. KG, 84544 Aschau am Inn (DE)
(72) Erfinder: Lindner, Markus, 75217 Birkenfeld (DE); Winterhalder, Marc, 84518 Garching an der Alz (DE)
(74) Vertreter: Kitzhofer, Thomas, Dipl.-Ing.

(57) **Zusammenfassung**

Ein Gasgenerator für ein Sicherheitssystem, insbesondere ein Fahrzeuginsassen-Rückhaltesystem, ist mit einer Brennkammer (7), die Treibstoff (9) enthält, einer Flüssigkeitskammer (31), die Flüssigkeit enthält, einer Mischkammer (13), in der sich das beim Abbrand des Treibstoffs (9) entstandene Gas und die Flüssigkeit vermischen, und einer Flüssigkeitsleitfläche (91), auf die die freigesetzte Flüssigkeit im wesentlichen tangential aufgebracht wird, versehen. Eine Strömungsabrißkante (101) ist in der Mischkammer (13) vorgesehen, die auf einer Seite durch die Flüssigkeitsfläche (91) und auf der anderen durch eine einen Gasführungskanal (51) begrenzende Fläche (103) definiert ist. Der Gasführungskanal (51) lenkt einen Gasstrom (G) in einem Winkel zwischen etwa 60° und 120° zur Flüssigkeitsleitfläche (91) im Bereich der Kante (101) in die Mischkammer (13), so daß die sich von der Kante (101) lösende Flüssigkeit (F) vom Gasstrom (G) mitgerissen wird.

## Beschreibung

Die Erfindung betrifft einen Gasgenerator für ein Sicherheitssystem, insbesondere ein Fahrzeuginsassen-Rückhaltesystem, mit einer Brennkammer, die Treibstoff enthält, und einer Flüssigkeitskammer, die Flüssigkeit enthält, einer Mischkammer, in der sich das beim Abbrand des Treibstoffs entstehende Gas und die Flüssigkeit vermischen, und mit einer Flüssigkeitsleitfläche, auf die freigesetzte flüssigkeit im wesentlichen tangential aufgebracht wird.

Ein derartiger Gasgenerator ist aus der DE 197 26 276 bekannt. Bei herkömmlichen Gasgeneratoren auf Feststoffbasis besteht der Festtreibstoff bislang vorwiegend aus Natriumazid, der jedoch toxisch und ökologisch bedenklich ist, weshalb Gasgeneratoren auf Natriumazidbasis mehr und mehr durch natriumazidfreie Gasgeneratoren ersetzt werden. Der Treibstoff kann hierbei aus verschiedenen Verbindungen bestehen, wobei bei diesen Treibstoffen gegenüber Natriumazid meist eine höhere Verbrennungstemperatur zur Vermeidung von unerwünschten Verbrennungsprodukten erzielt wird. Das extrem heiße Gas muß aber dadurch noch stärker bis zum Eintreten in das Sicherheitssystem, vorzugsweise einen Gassack, abgekühlt werden, damit das Sicherheitssystem, insbesondere das Gassackgewebe nicht beschädigt wird. Aus diesem Grund sind sogenannte Hybrid-Gasgeneratoren angedacht worden, die zum Teil mit einer Flüssigkeit, die auch brennbar sein kann, arbeiten. In das heiße Gas wird die Flüssigkeit eingespritzt, so daß diese verbrennt oder verdampft und damit das Volumen erhöht. Bei nicht verbrennenden Flüssigkeiten wird die Gastemperatur dadurch stark verringert. Damit möglichst schnell möglichst viel Flüssigkeit verdampft oder verbrennt, muß diese eine möglichst große Oberfläche aufweisen. Die gattungsgemäße DE 197 26 276 schlägt hierzu vor, die Flüssigkeit in tangentialer Richtung auf ein sich trompetenförmig aufweitendes Rohr aufzubringen. Es soll sich dadurch ein möglichst dünner, gleichmäßiger Flüssigkeitsfilm auf der Oberfläche ausbreiten. Auf die Oberfläche trifft in einem spitzen Winkel der Gasstrom aus der Brennkammer. Dieser Gasstrom drückt den Flüssigkeitsstrom, der nahe an dem und parallel zur Oberfläche des sich trompetenförmig aufweitenden Rohres verläuft, auf die Oberfläche des Rohres. Auf der Oberfläche wird die Flüssigkeit vom heißen Gasstrom verdampft und gelangt über Ausströmöffnungen im Gehäuse zur Sicherheitsvorrichtung.

Die Erfindung schafft einen Gasgenerator, bei dem die Flüssigkeit noch schneller verdampft oder verbrannt wird, so daß der Gasgenerator eine größere Leistungsfähigkeit aufweist. Dies wird bei einem Gasgenerator der eingangs genannten Art dadurch erreicht, daß eine Strömungsabrißkante in der Mischkammer vorgesehen ist, die auf einer Seite durch die Flüssigkeitsleitfläche und auf der anderen Seite durch eine einen Gasführungskanal begrenzende Fläche definiert ist, und daß der Gasführungskanal einen Gasstrom in einem Winkel von zwischen etwa 60° und 120° zur Flüssigkeitsleitfläche im Bereich (d.h. nahe) der Kante in die Mischkammer lenkt, so daß die sich von der Kante lösende Flüssigkeit vom Gasstrom mitgerissen wird. An der Kante treffen sich beim erfindungsgemäßen Gasgenerator die von den verschiedenen Seiten der Kante kommende Strömungen, nämlich einerseits die Flüssigkeit und andererseits das heiße Gas. Das heiße Gas nimmt die Flüssigkeit in Richtung zu den Ausströmöffnungen mit, verwirbelt sie und teilt sie in feinste Tröpfchen. Die Flüssigkeit wird also nicht auf eine Fläche gelenkt, auf die der Gasstrahl trifft und auf der sie verdampft, sondern die Flüssigkeit wird schon vorher vom Gasstrom stark verteilt und kann noch vor Auftreffen auf eine andere Fläche verdampfen oder verbrennen. Insofern unterscheidet sich die Erfindung auch von einem Gasgenerator, welcher mit einem sogenannten Prallblech arbeitet, auf welches ein Flüssigkeitsstrom gerichtet ist. Die Flüssigkeit wird in feine Tröpfchen durch das Aufprallen auf das Prallblech geteilt und nicht wie bei der Erfindung durch die zwei unterschiedlich gerichteten Ströme von Gas und flüssigkeit.

Vorzugsweise treffen der Gasstrom und die Flüssigkeit in einem Winkel von 90° aufeinander, indem der Gasstrom einen Winkel von etwa 90° zur Flüssigkeitsleitfläche im Bereich der Kante einnimmt. Da die Flüssigkeitsleitfläche auch, wie später noch erläutert werden wird, gekrümmt verlaufen kann, ist der Bereich entscheidend, in dem die Flüssigkeit die Flüssigkeitsleitfläche verläßt, also im Bereich der Kante.

Wenn sich die Gasströmung an den Gasführungskanal anlegt, was vorzugsweise der Fall ist, und der Kanal damit im Bereich der Kante die Richtung des Gasstroms bestimmt, kann die Richtung des Gasstromes auch unmittelbar durch die Ausrichtung des Gasführungskanals definiert werden. In diesem Fall endet vorzugsweise die Innenseite des Gasführungskanals in einem Winkel von etwa 90° zur Flüssigkeitsleitfläche im Bereich der Kante.

Wenn alle die Kante bildenden, angrenzenden Flächen gekrümmt sind, kommt es auf den Bereich der Fläche nahe der Kante an, welchen Winkel sie zueinander einnehmen. Gegebenenfalls müssen Tangentialebenen gebildet werden, um den Winkel zu bestimmen.

Gemäß der bevorzugten Ausführungsform sind die Flüssigkeitsleitfläche und der Gasführungskanal so zueinander ausgerichtet, daß der Strom aus Gas und mitgerissener flüssigkeit in das Innere der Mischkammer gerichtet ist. Dies soll aussagen, daß der Strom aus Gas und Flüssigkeit nicht etwa unmittelbar auf ein Prallblech oder eine benachbarte Wand gerichtet wird, wie dies bei dem gattungsgemäßen Stand der Technik der Fall war. Der Strom aus Gas und Flüssigkeit soll einen möglichst langen Weg durch die Mischkammer haben, bevor er auf ein anderes Teil auftrifft. Damit erhöht sich auch die zur Verfügung stehende Zeit bis zum Auftreffen auf eine Wand, in welcher das Gas die Flüssigkeit erwärmen und verdampfen kann.

Zu dem letztgenannten Zweck dient auch eine Ausbildung, gemäß der das von der Brennkammer in die Mischkammer gelangende Gas die Mischkammer in einer Richtung durchströmt. Die Flüssigkeitsleitfläche ist im Bereich der Kante dieser Strömungsrichtung abgewandt. Dies verbinden, daß die Gasströmung die flüssigkeit an die Flüssigkeitsleitfläche drückt. Vielmehr soll die Flüssigkeit durch den Gasstrom von der Flüssigkeitsleitfläche weggerissen werden, weshalb diese auch der Strömungsrichtung abgewandt ist.

Das Gas durchströmt die Mischkammer im wesentlichen in axialer Richtung. Die Flüssigkeitsleitfläche im Bereich der Kante verläuft in radialer Richtung, so daß die beiden Ströme aus Gas und Flüssigkeit im bevorzugten 90° Winkel aufeinandertreffen. Damit die sich auf der Flüssigkeitsleitfläche befindliche Flüssigkeitsschicht, die zur Kante strömt, möglichst dünn ist, erweitert sich die Flüssigkeitsleitfläche zur Kante hin konusförmig. Damit wird die Dicke der Flüssigkeitsschicht reduziert und ein feineres Zerstäuben der Flüssigkeit ermöglicht. Hierzu dient auch eine Ausbildung, gemäß der sich die Flüssigkeitsleitfläche zur Kante hin trompetenförmig nach außen krümmt. Diese gekrümmte Fläche kann den Flüssigkeitsstrom z.B. um 90° umlenken, und zwar von einem Eintrittsbereich der Flüssigkeit, in dem die Flüssigkeit tangential zur Flüssigkeitsleitfläche auf diese gelenkt wird, bis zur Kante.

Die Flüssigkeit wird in die Mischkammer eingespritzt, indem ein Arbeitsraum vorgesehen ist, welcher an die Flüssigkeitskammer angrenzt. In diesen Arbeitsraum wird Gas zum Auspressen der Flüssigkeit eingeleitet.

Gemäß der bevorzugten Ausführungsform ist eine magnetische Ventilvorrichtung vorgesehen, die die in den Arbeitsraum gelangende Gasmenge steuert. Durch das Magnetventil, welches eine Schaltzeit von lediglich 3 Millisekunden aufweist, kann die Flüssigkeitsmenge, damit die Abkühlung des Gasstroms und die gesamte Gasmenge gesteuert werden. Auch der zeitliche Verlauf der austretenden Gasmenge und damit der Gasdruck können variiert werden. Auch ein sogenanntes Pulsen, also ein Öffnen und Schließen des Ventils ist möglich. Darüber hinaus wird die Variabilität des Gasgenerators durch einfache Mittel gesteigert. Für unterschiedliche Zwecke oder unterschiedliche Gassäcke bei verschiedenen Fahrzeugen sind auch andere Gasmengen oder andere Gasdruckverläufe zur Erzielung einer optimalen Rückhaltewirkung erforderlich. Lediglich durch unterschiedliches Ansteuern mittels unterschiedlicher Programmierung der Steuerungseinheit, die für die Betätigung des Magnetventils zuständig ist, können bei gleichem Gasgenerator unterschiedliche Gasmengen und Druckverläufe erreicht werden.

Das Auspressen der Flüssigkeit kann mittels eines verschiebbaren Kolbens erfolgen, die die Flüssigkeitskammer vom Arbeitsraum trennen.

Üblicherweise wird ein Teil des erzeugten Gases zum Auspressen der Flüssigkeit aus der Flüssigkeitskammer verwendet. Hierzu kann beispielsweise ein Druckausgleichsrohr bei einem Rohrgasgenerator vorgesehen sein. Dieses axiale Druckausgleichsrohr verbindet die Brennkammer strömungsmäßig mit dem Arbeitsraum. Eine bevorzugte Anordnung der Kammern und Räume zueinander sieht vor, daß die Brennkammer und die Flüssigkeitskammer an entgegengesetzten axialen Enden des Rohrgasgenerators angeordnet sind und sich dazwischen die Mischkammer befindet. Eine Flüssigkeitsleitung führt Flüssigkeit in Richtung zur Brennkammer. Das Druckausgleichsrohr kann dabei wenigstens teilweise auch die Flüssigkeitsleitung begrenzen. Hierzu ist vorgesehen, daß das Druckausgleichsrohr von einem radial äußeren Begrenzungsrohr umgeben ist und dazwischen eine Flüssigkeitsleitung in Form eines Ringkanals gebildet ist. Auf einfache Weise wird so ein Leitungssystem für Flüssigkeit und Gas gebildet.

Die Flüssigkeitsleitfläche schließt sich vorzugsweise im Bereich der brennkammerseitigen Enden des Druckausgleichsrohrs und des Begrenzungsrohrs an die Außenseite des Druckausgleichsrohres an. Damit soll erreicht werden, daß die Strömung sich möglichst tangential an die Flüssigkeitsleitfläche anlegt oder parallel zu ihr verläuft und von ihr gelenkt wird.

Eine konstruktiv sehr einfache Ausgestaltung der Flüssigkeitsleitfläche wird erreicht, indem die Fläche durch die Seite einer Begrenzungswand zwischen Brennkammer und Mischkammer gebildet ist, die der Mischkammer zugewandt ist. Diese Begrenzungswand kann im Querschnitt gesehen gekrümmt verlaufen und sich auch auf der Brennkammerseite bis zur Mündung des zentral angeordneten Druckausgleichsrohres verjüngen. Damit lenkt die Begrenzungswand auf der Mischkammerseite die Flüssigkeit, die vorzugsweise axial in die Mischkammer einströmt, radial nach außen um. Auf der Brennkammerseite führt die Verjüngung zu einer verlustarmen Strömungsführung des Gases in das Druckausgleichsrohr.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Längsschnitt durch eine Ausführungsform des erfindungsgemäßen Gasgenerators,
Figur 2 eine vergrößerte Ansicht des in Figur 1 dargestellten rechten Endes im Bereich der magnetischen Ventilvorrichtung,

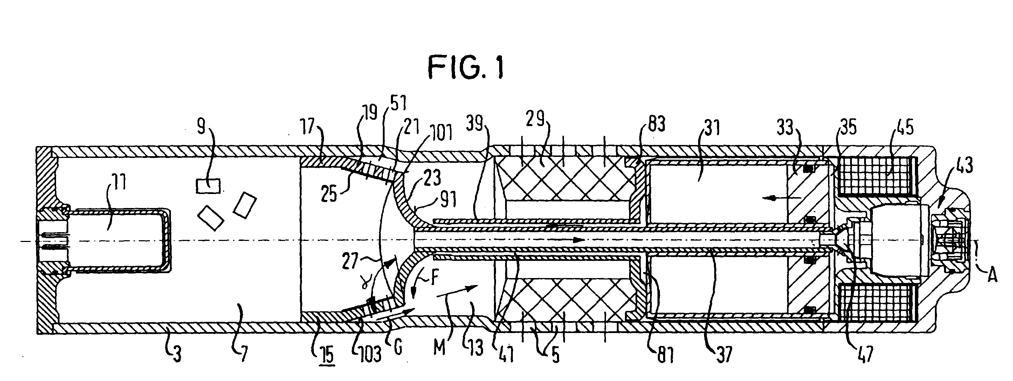

In Figur 1 ist ein Rohrgasgenerator zum Aufblasen eines Beifahrer-Gassackes dargestellt. Der Rohrgasgenerator hat ein im wesentlichen zylindrisches Außengehäuse 3 mit zahlreichen, am Umfang verteilten Ausströmöffnungen 5. Am linken axialen Ende ist eine Brennkammer 7 vorgesehen, welche mit Festtreibstoff 9 gefüllt ist. Ein Zünder 11 soll zum Entzünden des Treibstoffs 9 dienen. An die Brennkammer schließt sich eine Mischkammer 13 an, welche von der Brennkammer durch eine Begrenzungswand 15 in Form eines in das Gehäuse 3 eingeschobenen und darin befestigten hülsenförmigen Körpers getrennt ist. Dieser hülsenförmige Körper hat drei Abschnitte, nämlich einen zylindrischen Abschnitt 17, einen sich daran anschließenden zum rechten Ende des Gasgenerators verjüngenden kegelförmigen Abschnitt 19, der Durchströmöffnungen 21 aufweist, und einen trompetenförmig gebogenen Abschnitt 23. Die Durchströmöffnungen 21 werden innenseitig durch eine Verdämmung 25 abgedeckt, welche auch einen kalottenförmigen Bereich 27 aufweist, der von dem Abschnitt 23 entfernt ist.

In der Mischkammer ist im Bereich der Ausströmöffnungen 5 ein zylindrischer Filter 29 eingelegt. An die Mischkammer schließt sich eine Flüssigkeitskammer 31 an, die mit Flüssigkeit, worunter auch brennbare Flüssigkeit fallen kann, gefüllt ist. Das rechte axiale Ende der Flüssigkeitskammer 31 wird durch einen verschiebbaren Kolben 33 begrenzt. Der Kolben 33 trennt die Flüssigkeitskammer 31 von einem Arbeitsraum 35.

Im Bereich der Mittelachse A des Gasgenerators ist ein konzentrisch zu dieser angeordnetes Druckausgleichsrohr 37 vorgesehen, welches die Brennkammer 7 strömungsmäßig mit dem Arbeitsraum 35 verbindet. Im Bereich der Mischkammer wird das Druckausgleichsrohr 37 von einem Begrenzungsrohr 39 radial und umfangsmäßig umgeben. Dieses Begrenzungsrohr 39 hat zu seinem mischkammerseitigen Ende eine Einbuchtung, so daß sich die zwischen ihm und dem Druckausgleichsrohr 37 gebildete Flüssigkeitsleitung 41 verengt. Im Bereich des mischkammerseitigen Endes des Begrenzungsrohres 39 beginnt unmittelbar der trompetenförmig gebogene Abschnitt 23 der Begrenzungswand 15. Dieser Abschnitt ist so geschwungen, daß er sich fast stufenlos an die Außenseite des Druckausgleichsrohres im Bereich von dessen Ende anschließt und, wie später noch näher erläutert wird, eine allmähliche Umlenkung eines Flüssigkeitsstromes von der axialen in die radiale Richtung sicherstellt.

Am entgegengesetzten Ende des Druckausgleichsrohrs 37 kann deren Mündung zum Arbeitsraum 35 von einer magnetischen Ventilvorrichtung 43 geöffnet oder geschlossen werden. Die magnetische Ventilvorrichtung 43 weist eine Spule 45 und eine Ventilnadel 47 auf, welche die Mündung des Druckausgleichsrohres verschließen kann.

Für die im folgenden erläuterte Arbeitsweise des Gasgenerators ist noch der Bereich stromaufwärts der Mischkammer 13 zwischen Gehäuse 3 und dem kegelförmigem Abschnitt 19 der Begrenzungswand 15 wichtig, in den die Durchströmöffnungen 21 münden. Dieser Bereich wird als Gasführungskanal 51 bezeichnet.

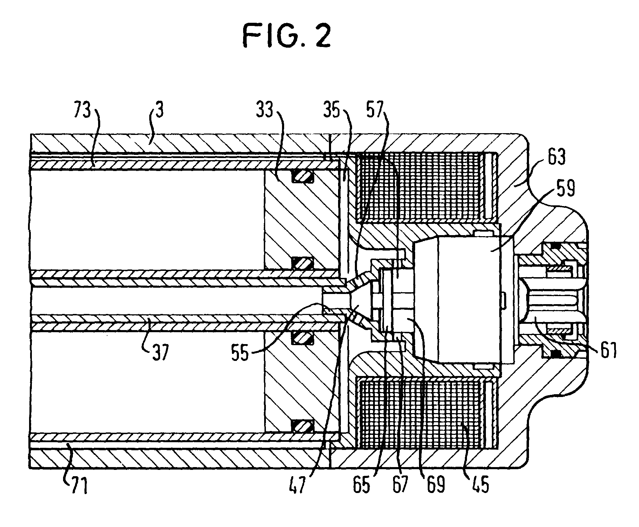

In Figur 2 sind die magnetische Ventilvorrichtung und der Arbeitsraum nochmals detaillierter gezeigt. In das arbeitsraumseitige Ende des Druckausgleichsrohres 37 ist eine konusförmig sich erweiternde Hülse 55 gesteckt, welche Durchströmöffnungen 57 aufweist.

Die magnetische Ventilvorrichtung 43 besteht aus einem Ankergehäuse 59, der elektrischen Kontaktierung 61 zu einer Steuervorrichtung, dem Ventilgehäuse 63, der Spule 45 sowie der Ventilnadel 47. In dem in Figur 2 gezeigten Zustand sind die Durchströmöffnungen 57 geschlossen. An das konusförmige Ende der Ventilnadel 47 schließt sich rückseitig eine Ankerscheibe 65 an, welche beim nach rechts verschieben der Ventilnadel Druckausgleichsbohrungen 67 in einer Zwischenwand verschließen kann. Diese Zwischenwand trennt den Arbeitsraum 35 von einer Ventilkammer 69. Die gezeigte Ventilvorrichtung ist ein sogenanntes 3/2-Wegeventil. In der Ebene der Druckausgleichsbohrungen 67 ist auch eine Mündung eines nicht näher gezeigten, sondern mit durchgezogener Linie angedeuteten Kanals vorgesehen, der die Kammer 69 mit einem Spalt 71 zwischen Flüssigkeitsbehälter 73, der die Flüssigkeitskammer bildet, und Gehäuse 3 verbindet. Der Spalt 71 führt zur Mischkammer 13. Diese Strömungsverbindung zwischen Mischkammer 13 und Arbeitsraum 35 dient einem Druckausgleich bei geschlossenem Ventil. Wird das Ventil geöffnet, schließt die Ankerscheibe 65 die Strömungsverbindung, so daß kein Druckausgleich zwischen Mischkammer 13 und Arbeitsraum 35 vorhanden ist. Die in Figur 2 dargestellte geschlossene Stellung des Ventils wird durch Bestromen der Spule 45 erreicht. Wird die Spule 45 nicht bestromt, kann, je nach Druck im Druckausgleichsrohr 37 die Ventilnadel 47 nach rechts verschoben werden, so daß das Ventil geöffnet wird und sich ein Druckausgleich zwischen Brennkammer 7 und Arbeitsraum 35 einstellen kann. Diese Abläufe werden aber im folgenden noch näher erläutert.

Bei einem Unfall wird über den Zünder 11 der Treibstoff 9 gezündet. Das entstehende Gas zerstört die Verdämmung 25 sowohl im Bereich der Durchströmöffnungen 21 als auch im Bereich 27. Ein Teil des Gases, nämlich der größte Teil, gelangt über die Durchströmöffnungen 21 in den Gasführungskanal 51 und weiter in die Mischkammer 13. Ein geringerer Teil des Gases gelangt über das Gasdruckausgleichsrohr 37 in den Arbeitsraum 35, wenn die Spule 45 nicht bestromt wird und das Gas die Ventilnadel 47 nach rechts drückt. Dann strömt das Gas über die Durchströmöffnungen 57 in den Arbeitsraum 35. Dadurch wird der Kolben 33 nach links verschoben. Der Flüssigkeitsbehälter 73 hat an seinem dem Kolben 33 entfernten stirnseitigen Ende zahlreiche Sollbruchlinien. In diesem Bereich bricht der Behälter 73 auf, und Flüssigkeit strömt über einen Sammelraum 81, der zwischen dem Behälter 73 und einer Wand 83 gebildet ist, in die Flüssigkeitsleitung 41. Die Flüssigkeit verläßt die Flüssigkeitsleitung und gelangt zum trompetenförmigen Abschnitt 23 der Trennwand 15. Dieser Abschnitt 23 hat eine der Mischkammer 13 zugewandte gekrümmte Fläche, die als Flüssigkeitsleitfläche 91 bezeichnet wird. Der ringförmige Flüssigkeitsstrom legt sich, da er tangential auf die Flüssigkeitsleitfläche 91 im Bereich der Mündung der Flüssigkeitsleitung 41 gerichtet ist, an diese Fläche an. Der sich auf der Fläche 91 bildende Flüssigkeitsfilm wird immer dünner, da sich die Fläche in Strömungsrichtung vergrößert. Die Strömung, die mit einem Pfeil F dargestellt ist, wird radial nach außen gelenkt, bis die Fläche in einer Kante 101 endet. Diese Kante 101 ist eine Strömungsabrißkante für die Flüssigkeit. Im Bereich der Strömungsabrißkante wird die Flüssigkeit durch den Gasstrom G (siehe Pfeil G) in das Innere der Mischkammer 13 mitgerissen und umgelenkt. Die beiden Ströme F und G nehmen im Bereich der Kante einen Winkel von etwa 90° zueinander ein. Da die Strömungsleitfläche 91 der Strömung G abgewandt ist, also in deren Windschatten liegt, wird das Gemisch aus Gas und darin verteilter Flüssigkeit nicht an eine nahe Wand gelenkt, sondern in die Mischkammer 13 hinein und zwar schräg radial einwärts bis zwischen dem Filter 29 und dem Begrenzungsrohr 39, so daß sich ein sehr langer Strömungsweg für das Mischgas, welches durch den Pfeil M gekennzeichnet ist, ergibt. Auf diesem Weg wird die Flüssigkeit verdampft und das Gas abgekühlt. Das Gemisch aus verdampfter Flüssigkeit und abgekühltem Gas verläßt den Gasgenerator durch den Filter 29 und die Ausströmöffnungen 5.

Zur optimalen Vermischung von flüssigkeit und heißem Gas ist die Ausbildung der die Strömungen definierenden Flächen im Bereich der Kante 101 entscheidend. Der Gasführungskanal 51 ist innenseitig durch die äußere Fläche 103 des Abschnitts 19 definiert. Diese Fläche trifft im Bereich der Kante 101 in einem Winkel α von 90° auf die Flüssigkeitsleitfläche 91, so daß die Kante 101 ein 90°-Kante ist. Der Gasstrom G reißt, wie erläutert, die Flüssigkeit sofort mit, so daß diese nicht radial nach außen auf das Gehäuse 3 treffen kann. Durch dieses Mitreißen und Aufreißen des Flüssigkeitsfilms, der an der Kante 101 die Flüssigkeitsleitfläche 91 verläßt, wird die Flüssigkeit feinst verteilt und kann dadurch schnell Energie des Gases aufnehmen.

Es sind, je nach Ausbildung des Gasgenerators, auch andere Winkel der Strömungen F und G denkbar, nämlich Winkel im Bereich zwischen 60 und etwa 120°. Wichtig dabei ist jedoch, daß diese Winkel so auf die Geometrie der Wandungen abgestimmt ist, daß die Flüssigkeit vom Gasstrom mitgerissen und feinst verteilt wird und einen so langen Weg in der Mischkammer hat, daß sie nicht im flüssigen, sondern im verdampften Zustand auf die nächste Wand trifft.

## Patentansprüche

1. Gasgenerator für ein Sicherheitssystem, insbesondere ein Fahrzeuginsassen-Rückhaltesystem, mit einer Brennkammer (7), die Treibstoff (9) enthält,
einer Flüssigkeitskammer (31), die Flüssigkeit enthält,
einer Mischkammer (13), in der sich das beim Abbrand des Treibstoffs (9) entstandene Gas und die Flüssigkeit vermischen, und
einer Flüssigkeitsleitfläche (91), auf die die freigesetzte Flüssigkeit im wesentlichen tangential aufgebracht wird,
dadurch gekennzeichnet, daß eine Strömungsabrißkante (101) in der Mischkammer (13) vorgesehen ist, die auf einer Seite durch die Flüssigkeitsleitfläche (91) und auf der anderen durch eine einen Gasführungskanals (51) begrenzende Fläche (103) definiert ist, und
daß der Gasführungskanal (51) einen Gasstrom (G) in einem Winkel zwischen etwa 60° und 120° zur Flüssigkeitsleitfläche (91) im Bereich der Kante (101) in die Mischkammer (13) lenkt, so daß die sich von der Kante (101) lösende Flüssigkeit (F) vom Gasstrom (G) mitgerissen wird.

2. Gasgenerator nach Anspruch 1, dadurch gekennzeichnet, daß der Gasstrom (G) einen Winkel von etwa 90° zur Flüssigkeitsleitfläche (91) im Bereich der Kante (101) einnimmt.

3. Gasgenerator nach Anspruch 2, dadurch gekennzeichnet, daß die Innenseite (103) des Gasführungskanals (51) in einem Winkel von etwa 90° zur Flüssigkeitsleitfläche (91) im Bereich der Kante (101) an der Kante (101) endet.

4. Gasgenerator nach einem der vorhergehenden Ansprüche, dadurch gekennzeichnet, daß die Flüssigkeitsleitfläche (91) und der Gasführungskanal (51) so zueinander ausgerichtet sind, daß der Strom aus Gas (G) und mitgerissener Flüssigkeit in das Innere der Mischkammer (13) gerichtet ist.

5. Gasgenerator nach einem der vorhergehenden Ansprüche, dadurch gekennzeichnet, daß die Flüssigkeitsleitfläche (91) im Bereich der Kante (101) der Richtung des Gasstromes (G), der von der Brennkammer (7) in die Mischkammer (13) über den Gasführungskanal (51) geleitet wird, abgewandt ist.

6. Gasgenerator nach Anspruch 5, dadurch gekennzeichnet, daß der über den Gasführungskanal (51) in die Mischkammer (13) gelangende Gasstrom (G) im wesentlichen in axialer Richtung ausgerichtet ist und die Flüssigkeitsleitfläche (91) im Bereich der Kante (101) in radialer Richtung verläuft.

7. Gasgenerator nach einem der vorhergehenden Ansprüche, dadurch gekennzeichnet, daß sich die Flüssigkeitsleitfläche (91) zur Kante (101) konusförmig erweitert.

8. Gasgenerator nach Anspruch 7, dadurch gekennzeichnet, daß die Flüssigkeitsleitfläche (91) zur Kante (101) trompetenförmig nach außen gekrümmt ist.

9. Gasgenerator nach einem der vorhergehenden Ansprüche, gekennzeichnet durch einen Arbeitsraum (35), der an die Flüssigkeitskammer (31) angrenzt und in den Gas zum Auspressen von Flüssigkeit eingeleitet wird.

10. Gasgenerator nach Anspruch 9, dadurch gekennzeichnet, daß eine magnetische Ventilvorrichtung (43) vorgesehen ist, die die in den Arbeitsraum (35) gelangende Gasmenge steuert.

11. Gasgenerator nach einem der vorhergehenden Ansprüche, dadurch gekennzeichnet, daß der Gasführungskanal (51) stromabwärts der Brennkammer (7) angeordnet ist und der Gasstrom (G) von der Brennkammer (7) in den Gasführungskanal (51) gelangt.

12. Gasgenerator nach einem der Ansprüche 9 bis 11, dadurch gekennzeichnet, daß ein Teil des erzeugten Gases zum Auspressen der Flüssigkeit aus der Flüssigkeitskammer (31) verwendet wird.

13. Gasgenerator nach Anspruch 12, dadurch gekennzeichnet, daß er ein Rohrgasgenerator ist und ein axiales Druckausgleichsrohr (37) vorgesehen ist, das die Brennkammer (7) und den Arbeitsraum (35), der an die Flüssigkeitskammer (31) angrenzt, strömungsmäßig miteinander verbindet.

14. Gasgenerator nach Anspruch 13, dadurch gekennzeichnet, daß die Brennkammer (7) und die Flüssigkeitskammer (31) an entgegengesetzten axialen Enden des Rohrgasgenerators angeordnet sind und dazwischen die Mischkammer (13) angeordnet ist, wobei eine Flüssigkeitsleitung (41) die Flüssigkeit in Richtung zur Brennkammer (17) führt.

15. Gasgenerator nach Anspruch 14, dadurch gekennzeichnet, daß das Druckausgleichsrohr (37) wenigstens zum Teil auch die Flüssigkeitsleitung (41) begrenzt.

16. Gasgenerator nach Anspruch 15, dadurch gekennzeichnet, daß das Druckausgleichsrohr (37) von einem radial äußeren Begrenzungsrohr (39) umgeben ist und dazwischen die Flüssigkeitsleitung (41) gebildet ist.

17. Gasgenerator nach Anspruch 16, dadurch gekennzeichnet, daß im Bereich der brennkammerseitigen Enden des Druckausgleichsrohres (37) und des Begrenzungstohres (39) die Flüssigkeitsleitfläche (91) von der Außenseite des Druckausgleichsrohres (37) aus beginnt.

18. Gasgenerator nach Anspruch 17, dadurch gekennzeichnet, daß die Flüssigkeitsleitfläche (91) von der von der Außenseite des Druckausgleichsrohres (37) bis zur Strömungsabrißkante (101) gekrümmt verläuft.

19. Gasgenerator nach einem der vorhergehenden Ansprüche, dadurch gekennzeichnet, daß die Flüssigkeitsleitfläche (91) durch die der Mischkammer (13) zugewandte Seite einer Begrenzungswand (15) zwischen Mischkammer (13) und Brennkammer (7) gebildet ist.

20. Gasgenerator nach einem der Ansprüche 13 bis 18, dadurch gekennzeichnet, daß die Flüssigkeitsleitfläche (91) durch die der Mischkammer (13) zugewandte Seite einer Begrenzungswand (15) zwischen Mischkammer (13) und Brennkammer (7) gebildet ist und daß die Begrenzungswand (15) im Längsschnitt gesehen gekrümmt verläuft und sich ihre der Brennkammer (7) zugewandte Seite bis zur Mündung des Druckausgleichsrohres (37) verjüngt.
